## Europäisches Patentamt
## European Patent Office
## Office européen des brevets

(19)

(11) Veröffentlichungsnummer: **0 116 342**
**B1**

(12)

# EUROPÄISCHE PATENTSCHRIFT

(45) Veröffentlichungstag der Patentschrift:
18.05.88

(51) Int. Cl.⁴: **C 03 B 37/025, C 03 C 17/02**

(21) Anmeldenummer: 84101047.3

(22) Anmeldetag: 02.02.84

(54) Verfahren zur Herstellung einer glasigen Vorform für Lichtwellenleiter.

(30) Priorität: 11.02.83 DE 3304721

(43) Veröffentlichungstag der Anmeldung:
22.08.84 Patentblatt 84/34

(45) Bekanntmachung des Hinweises auf die Patenterteilung:
18.05.88 Patentblatt 88/20

(84) Benannte Vertragsstaaten:
DE FR GB IT NL

(56) Entgegenhaltungen:
EP-A-0 055 822
FR-A-2 178 178
FR-A-2 321 459
FR-A-2 389 146
GB-A-1 559 768
US-A-3 459 673
US-A-4 002 512
US-A-4 253 863

(73) Patentinhaber: **Licentia Patent- Verwaltungs- GmbH, Theodor- Stern- Kai 1, D-6000 Frankfurt/Main 70 (DE)**

(72) Erfinder: **Kuisl, Max, Dr.rer.nat., Binsenweiherweg 9, D-7900 Ulm (DE)**

(74) Vertreter: **Schulze, Harald Rudolf, Dipl.- Ing., Licentia Patent- Verwaltungs- GmbH Theodor- Stern- Kai 1, D-6000 Frankfurt/Main 70 (DE)**

EP 0 116 342 B1

## Beschreibung

Die Erfindung betrifft ein Verfahren zur Herstellung einer glasigen Vorform für Lichtwellenleiter nach dem Oberbegriff des Patentanspruchs 1.

Die Erfindung betrifft insbesondere ein Verfahren bei dem durch eine Außenbeschichtung eines Trägers (Grundkörpers) zunächst ein Vorformrohr hergestellt wird, das anschließend zu einem Glasstab kollabiert wird. Aus diesem Glasstab wird anschließend der Lichtwellenleiter gezogen. Aus der Zeitschrift "IEEE of Quantum Electronics Vol. QE-18 (1982), Seite 1418, ist solch ein Verfahren für eine Außenbeschichtung ("outside vapor deposition, OVD") bekannt, bei dem ein Brenner axial entlang eines Stabes bewegt wird. Diesem Brenner werden glasbildende Gase und/oder Dämpfe zugeführt, so daß eine Außenabscheidung von glasbildenden Schichten ermöglicht wird. Ein derartiges Verfahren hat den Nachteil, daß mit Hilfe eines einzigen Brenners keine hohen Abscheidungsraten möglich sind. Bei einer derartigen Abscheidung entlang einer Mantellinie des Stabes wird zur Erhöhung der Abscheiderate ein Brenner mit einer linienförmigen Flamme benötigt. Eine solche Flamme enthält jedoch Instabilitäten, die zu einer störenden ungleichmäßigen Beschichtung führen.

Aus der US-A- 4 002 512 ist bekannt, zur Herstellung einer Vorform Dichlorsilan mit einem oxidierenden Gas oder Dampf, z. B. $O_2$ oder $H_2O$, bei erhöhter Temperatur (750° C bis 1200° C) so umzusetzen, daß glasiges Siliziumdioxid abgeschieden wird.

Aufgabe der Erfindung ist es daher, ein wirtschaftlich arbeitendes gattungsgemäßes Verfahren anzugeben, das insbesondere eine großflächige und gleichmäßige Beschichtung ermöglicht.

Diese Aufgabe wird erfindungsgemäß gelöst durch die im kennzeichnenden Teil des Patentanspruchs 1 angegebenen Merkmale.

Ausgestaltungen und Weiterbildungen der Erfindung sind den Unteransprüchen entnehmbar.

Ein Vorteil der Erfindung besteht darin, daß die Abscheidung einer glasbildenden Schicht bei so niedrigen Temperaturen erfolgen kann, daß Materialprobleme, z. B. die Temperaturbeständigkeit der verwendeten Materialien, der Beschichtungsanordnung nahezu vernachlässigbar sind.

Die Erfindung wird im folgenden anhand eines Ausführungsbeispiels näher erläutert.

Bei bekannten chemischen Dampfabscheidungsverfahren, z. B. dem MCVD-Verfahren zur Herstellung von Vorformen für Lichtwellenleiter aus Quarzglas wird von einer Umsetzung von Siliziumtetrachlorid ($SiCl_4$) mit Sauerstoff ($O_2$) ausgegangen. Diese Reaktion benötigt Temperaturen von ungefähr 1600° C, um in Gang zu kommen. Das Haupthindernis für eine technologische Beherrschung einer Abscheidung über die gesamte Länge der Vorform ist diese hohe Temperatur, welche den Einsatz vieler Konstruktionsmaterialien verbietet und außerdem eines hohen Energieaufwandes bedarf.

Wird dagegen erfindungsgemäß ein glasbildendes Chlorid, z. B. $SiCl_4$, mit Wasserdampf zu einer glasbildenden Schicht umgesetzt, so erfolgt diese Reaktion vorteilhafterweise bei wesentlich niedrigeren Temperaturen, z. B. im Temperaturbereich von 20° C bis 800° C. Bei dieser Reaktion können in der Vorform störende OH⁻-Ionen entstehen, die zu optischen Verlusten führen. Eine Beseitigung der OH⁻-Ionen ist jedoch möglich, z. B. gemäß einem Verfahren, daß in der Zeitschrift: IEEE Journal of Quantum Electronics, Vol. QE 18 (1982), Seite 1883, beschrieben ist. Überraschend ist nun, daß die erfindungsgemäße Abscheidung einer glasbildenden Schicht, z. B. dotiertes und/oder undotiertes $SiO_2$, aus den beispielhaften Reaktionspartnern $SiCl_4$ und dampfförmigem $H_2O$, bevorzugt bei niedrigen Temperaturen, z. B. bei einer Raumtemperatur von 20° C, abläuft. Bei höheren Temperaturen, z. B. bei 1000° C, ist dagegen die Abscheidungsrate der Schicht vernachlässigbar. Diese Eigenschaft der Reaktion ermöglicht eine bevorzugte Abscheidung der Schicht auf einem Substrat, z. B. einem Trägerrohr, während eine unerwünschte Abscheidung im übrigen Reaktionsraum dadurch vermieden wird, daß dieser beheizt wird, z. B. auf eine Temperatur von 1000° C.

Zur beispielhaften Herstellung einer Vorform für Lichtwellenleiter werden die gas- und/oder dampfförmigen Reaktionspartner $SiCl_4$ und $H_2O$ in eine allseits beheizte Reaktionskammer geleitet, in der sich ein von innen mit Wasser gekühltes Graphitrohr, das Substrat, befindet. Auf diesem Substrat schlägt sich nun der Hauptteil des entstehenden $SiO_2$ als feste weiße Schicht ("soot") nieder. Durch eine Temperaturbehandlung wird das aus einzelnen aneinanderklebenden Partikeln bestehende Abscheidungsprodukt auf dem Graphitsubstrat in eine glasige Vorform umgewandelt. Als Temperaturen für die Beheizung des Reaktionsraumes werden z. B. 1000° C gewählt. Die Reaktionspartner werden durch eine Trägergas in die Reaktionskammer geleitet. Durch die Erniedrigung der Reaktionstemperetur von etwa 1600° C auf 1000° C ist mit einer Energieeinsparung auch das Materialproblem entschärft. Bei einer Zugabe von Germaniumtetrachlorid zum Reaktionsgemisch bestehen keine Schwierigkeiten, da $GeCl_4$ ebenso mit Wasserdampf reagiert wie $SiCl_4$. Vorteilhaft ist hierbei, daß sich $GeCl_4$ mit Wasserdampf vollständig in Germaniumoxid ($GeO_2$) umsetzt, das als Dotierung der abgeschiedenen Schicht verwendet wird (Brechzahlerhöhung von $SiO_2$). Bei den bekannten Umsetzungen von $GeCl_4$ mit $O_2$ wird dagegen keine vollständige Umsetzung zu $GeO_2$ erreicht.

## Patentansprüche

1. Verfahren zur Herstellung einer glasigen Vorform für Lichtwellenleiter, bei welchem Verfahren
- zunächst eine glasbildende Schicht auf einem Trägerkörper abgeschieden wird, das sich innerhalb einer Reaktionskammer befindet, und
- anschließend die glasbildende Schicht durch eine Temperaturbehandlung in eine glasige Schicht umgewandelt wird,
dadurch gekennzeichnet,
- daß ein Gas- und/oder Dampfgemisch, das gasförmiges Siliziumtetrachlorid (SiCl₄) und gegebenenfalls ein Chlorid eines anderen glasbildenden Elements sowie Wasserdampf enthält, verwendet wird,
- daß der Trägerkörper ein Trägerrohr ist, das gekühlt und auf einer Temperatur zwischen 20° C und 800° C gehalten wird, während die Reaktionskammer auf eine Temperatur erhitzt wird, die wesentlich größer als 800° C, z. B. 1000° C ist und
- daß das Gas- und/oder Dampfgemisch derart durch die Reaktionskammer geleitet wird, daß durch eine chemische Reaktion aus dem Gas- und/oder Dampfgemisch SiO₂-haltige Partikel entstehen, die als glasbildende Schicht auf dem gekühlten Trägerrohr abgeschieden werden.

2. Verfahren nach Anspruch 1, dadurch gekennzeichnet, daß in dem Gas- und/oder Dampfgemisch zusätzlich Germaniumtetrachlorid (GeCl₄) verwendet wird.

3. Verfahren nach Anspruch 1 oder Anspruch 2, dadurch gekennzeichnet, daß das Trägerrohr Graphit enthält und daß als Kühlmittel Wasser verwendet wird, das durch den Innenraum des Trägerrohres geleitet wird.

4. Verfahren nach einem der vorhergehenden Ansprüche, dadurch gekennzeichnet, daß nach dem Abscheiden von mindestens einer Schicht eine Temperaturbehandlung erfolgt, durch die mindestens eine glasige Schicht erzeugt wird.

5. Verfahren nach Anspruch 6, dadurch gekennzeichnet, daß die Temperaturbehandlung in einer Gas- und/oder Dampfatmosphäre vorgenommen wird, die eine Entstehung von Hydroxyl (OH⁻)-Ionen vermeidet.

## Claims

1. Method for the production of a vitreous preform for optical conductors, in which method
- a vitrifying layer is initially precipitated onto a carrier which is disposed within a reaction chamber and
- the vitrifying layer is subsequently converted into a vitreous layer by a temperature treatment,
characterised thereby,
- that a gas and/or vapour mixture is used, which contains silicon tetrachloride (SiCl₄) and possibly a chloride of another vitrifying element as well as water vapour,
- that the carrier body is a carrier tube which is cooled and held at a temperature of between 20° C and 800° C, while the reaction chamber is heated to a temperature which is substantially higher than 800° C, for example 1000° C, and
- that the gas and/or vapour mixture is conducted through the reaction chamber in such a manner that particles containing SiO₂ arise out of the gas and/or vapour mixture through a chemical reaction and are precipitated as vitrifying layer on the cooled carrier tube.

2. Method according to claim 1, characterised thereby, that germanium tetrachloride (GeCl₄) is used additionally in the gas and/or vapour mixture.

3. Method according to claim 1 or 2, characterised thereby, that the carrier tube contains graphite and that water, which is conducted through the interior space of the carrier tube is used as coolant.

4. Method according to one of the preceding claims, characterised thereby, that a temperature treatment, through which at least one vitreous layer is produced, takes place after the precipitation of at least one layer.

5. Method according to claim 4, characterised thereby, that the temperature treatment is undertaken in a gas and/or steam atmosphere which avoids an arising of hydroxyl (OH⁻) ions.

## Revendications

1. Procédé pour la fabrication d'une préforme vitreuse pour guides d'ondes optiques, selon lequel:
- on dépose d'abord une couche formatrice de verre sur un corps de support qui se trouve dans une chambre de réaction et
- on transforme ensuite la couche formatrice de verre en une couche vitreuse par traitement thermique,
caractérisé en ce que:
- on utilise un mélange de gaz et/ou de vapeur qui contient du tétrachlorure de silicium (SiCl₄) gazeux et, éventuellement, un chlorure d'un autre élément formateur de verre, ainsi que de la vapeur d'eau,
- le corps de support est un tube de support que l'on refroidit et que l'on maintient à une température comprise entre 20° C et 800° C, tandis que l'on chauffe la chambre de réaction à une température qui est nettement supérieure à 800° C, par exemple à 1 000° C, et
- on fait passer le mélange de gaz et/ou de vapeur à travers la chambre de réaction, de manière que, par suite d'une réaction chimique, il se forme, à partir du mélange de gaz et/ou de vapeur, des particules contenant du SiO₂, qui sont déposées sous forme d'une couche formatrice de verre sur le tube de support refroidi.

2. Procédé selon la revendication 1, caractérisé en ce que l'on utilise en outre du tétrachlorure de

germanium (GeCl$_4$) dans le mélange de gaz et/ou de vapeur.

3. Procédé selon la revendication 1 ou 2, caractérisé en ce qua le tube de support contiant du graphite et son refroidissement est produit par de l'eau que l'on fait circuler à l'intérieur du tube de support.

4. Procédé selon une des revendications précédentes, caractérisé en ce que, après le dépôt d'au moins una couche, on affectue un traitement thermique par lequal on produit au moins une couche vitreuse.

5. Procédé selon la ravendication 4, caractérisé en ce que l'on effectue le traitement tharmique dans une atmosphère de gaz et/ou de vapeur qui évite la formation d'ions d'hydroxyle (OH⁻).